# EUROPEAN PATENT SPECIFICATION

(11) **EP 3 045 325 B1**
(45) Date of publication and mention of the grant of the patent: **27.06.2018**
(21) Application number: 14844529.9
(22) Date of filing: 24.07.2014
(51) Int. Cl.: B60C 11/00

(54) **TIRE**
REIFEN
PNEU

(30) Priority: 12.09.2013 JP 2013189128
(43) Date of publication of application: 20.07.2016
(73) Proprietor: Bridgestone Corporation, Tokyo 104-8340 (JP)
(72) Inventor: TAKAMASU, Sho, Tokyo 104-8340 (JP)
(74) Representative: Oxley, Robin John George
(86) International application number: PCT/JP2014/069551
(87) International publication number: WO 2015/037336

(56) References cited:
- EP-A1- 1 666 277
- JP-A- H0 971 107
- JP-A- H0 971 107
- JP-A- H03 121 905
- JP-A- H05 229 308
- JP-A- H06 191 223
- JP-A- 2006 160 255
- JP-A- 2009 001 071
- JP-A- 2012 091 738
- JP-B2- 3 288 777

## Description

### Technical Field

The present invention relates to a tire including a tread portion having a ground contacting tread surface.

### Background Art

A tire is known in the art which includes a pair of bead portions assembled to a rim flange, a pair of side portions contiguous with the pair of bead portions on the outer side in a tire radial direction, and a tread portion having a ground contacting tread surface that comes into contact with a road surface.

Various methods for designing the contour of the tread portion (hereinafter referred to as a "tread profile") in a cross-section taken along a tire width direction and a tire radial direction have been studied. For example, Patent Literature 1 discloses a design method for a tread profile that is intended to improve ride comfort and handling stability. Attention is also drawn to the disclosures of JP-3-288777, JP-H09-71107 and EP1666277.

### Citation List

### Patent Literature

Patent Literature 1: JP 2005-53260 A

### Summary of Invention

However, there is room for improvement in the design method for a tread profile in terms of wear resistance and uneven wear resistance.

Accordingly, the present invention has been made to solve the above problem and is directed to a tire capable of improving wear resistance and uneven wear resistance.

A tire according to the present invention includes a tread portion having a ground contacting tread surface that comes into contact with a road surface. The ground contacting tread surface includes a pair of ground contacting ends forming outermost ends in a tire width direction. The tread portion includes a shoulder region having a range from one of the pair of ground contacting ends to 0.20W to 0.30W inward of the one ground contacting end in the tire width direction where a distance between the pair of ground contacting ends is a ground contact width W. A tread profile that is a contour of the shoulder region is defined by N radii of curvature SR(n) (n = 1 to N) in order from inner side in the tire width direction in a cross-section taken along the tire width direction and a tire radial direction. The above N and the radii of curvature SR(n) satisfy a condition of: N ≥ 3 and SR(n) / SR(n + 1) ≤ 3.

In the present invention, the shoulder region includes an inner shoulder end forming an innermost end in the tire width direction. The tread portion includes a center region having a range from a tire equator line to the inner shoulder end. A tread profile that is a contour of the center region is defined by M radii of curvature CR(n) (n = 1 to M) in order of proximity to the tire equator line in the cross-section taken along the tire width direction and the tire radial direction. SR(1) and CR(M) satisfy a condition CR(M) / SR(1) ≥ 5, where SR(1) defines an innermost portion in the tire width direction of the radii of curvature SR(1) to SR(N) and CR(M) defines an outermost portion in the tire width direction of the radii of curvature CR(1) to CR(M). The surface of the shoulder region in the tire radial direction is gradually varied along the tire width direction in the cross-section taken along the tire width direction and the tire radial direction.

In the present invention, preferably, the tread portion includes an out-of-shoulder region having a range from one of the pair of ground contacting ends to 0.05W outward of the one ground contacting end in the tire width direction. Preferably, a tread profile that is a contour of the out-of-shoulder region is defined by L radii of curvature SR(n) (n = N+1 to N+L) in order from inner side in the tire width direction in the cross-section taken along the tire width direction and the tire radial direction. Preferably, the radii of curvature SR(n) satisfy a condition SR(n) / SR(n + 1) ≤ 3.

According to the present invention, it is possible to provide a tire capable of improving wear resistance and uneven wear resistance.

### Brief Description of Drawings

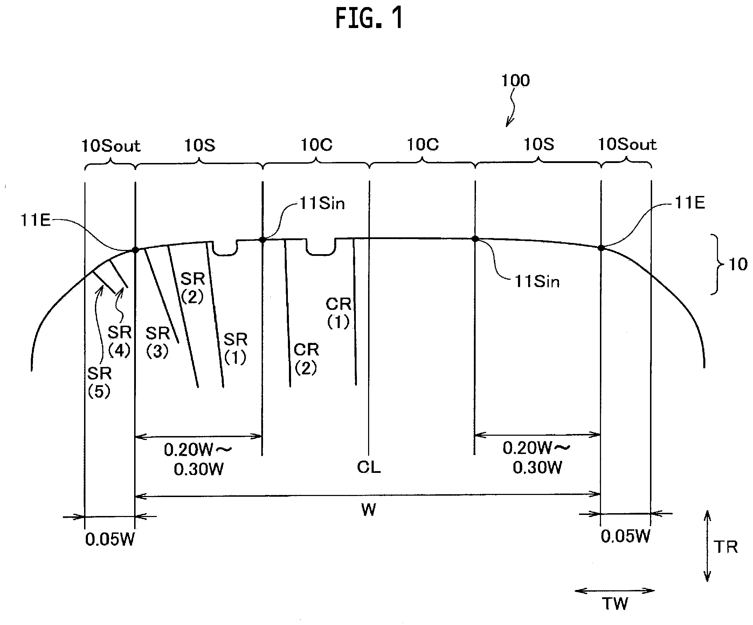

Fig. 1 is a view illustrating part of a tire 100 according to a first embodiment.

### Description of Embodiments

Hereinafter, a susceptor according to an embodiment of the present invention will be described with reference to the drawings. Note that, in the following description of the drawings, same or similar reference signs denote same or similar elements and portions.

It is to be noted that the drawings are schematic and the dimensions or ratios are different from actual values. Accordingly, specific dimensions and the like should be determined by taking the following description into consideration. Needless to say, a relationship or a ratio of mutual dimensions may differ among the drawings.

### [Overview of embodiment]

A tire according to an embodiment includes a tread portion having a ground contacting tread surface that comes into contact with a road surface. The ground contacting tread surface includes a pair of ground contacting ends forming outermost ends in a tire width direction. The tread portion includes a shoulder region having a range from one of the pair of ground contacting ends to 0.20W to 0.30W inward of the one ground contacting end in the tire width direction where a distance between the pair of ground contacting ends is a ground contact width W. A tread profile that is a contour of the shoulder region is defined by N radii of curvature SR(n) (n = 1 to N) in order from inner side in the tire width direction in a cross-section taken along the tire width direction and a tire radial direction. The above N and the radii of curvature SR(n) satisfy the condition of: N ≥ 3 and SR(n) / SR(n + 1) ≤ 3.

In this embodiment, N and the radii of curvature SR(n) satisfy the condition of: N ≥ 3 and SR(n) / SR(n + 1) ≤ 3. That is, the surface (i.e. tread profile) of the shoulder region in the tire radial direction is gradually varied along the tire width direction in the cross-section taken along the tire width direction and the tire radial direction. This prevents or reduces the deviation of a ground contact pressure between the shoulder region and the road surface even when the shoulder region is deformed during rotation of the tire, and wear resistance and uneven wear resistance can be improved.

### [First embodiment]

### (Structure of tire)

A tire according to a first embodiment is described below. Fig. 1 is a view illustrating part of a tire 100 according to the first embodiment. In particular, Fig. 1 illustrates a partial cross-section of the tire 100 taken along a tire width direction TW and a tire radial direction TR.

The tire 100 includes a pair of bead portions assembled to a rim flange, side portions contiguous with the pair of bead portions on the outer side in the tire radial direction TR, and a tread portion having a ground contacting tread surface that comes into contact with a road surface.

Specifically, the tire 100 includes a tread portion 10 having a ground contacting tread surface as illustrated in Fig. 1. The tread portion 10 includes center regions 10C, shoulder regions 10S, and out-of-shoulder regions 10Sout.

Here, the ground contacting tread surface is a surface of the tread portion 10 in contact with a road surface under the condition that the tire 100 is mounted on a normal rim as defined by JATMA, the internal pressure of the tire 100 is a normal internal pressure as defined by JATMA, a load applied to the tire 100 is 80% of the maximum load capacity as defined by JATMA, and a camber angle is 0 degrees. The ground contacting tread surface includes a pair of ground contacting ends 11E, 11E forming outermost ends in the tire width direction TW. A distance between the pair of ground contacting ends 11E, 11E, i.e., a ground contact width of the ground contacting tread surface in the tire width direction TW, is denoted by "W".

The center region 10C is provided on the inner side of the shoulder region 10S in the tire width direction TW. Specifically, the center region 10C has a range from a tire equator line CL to an inner shoulder end 11Sin.

The shoulder region 10S is provided on the outer side of the center region 10C in the tire width direction TW. Specifically, the shoulder region 10S has a range from the ground contacting end 11E to 0.20W to 0.30W inward of the ground contacting end 11E in the tire width direction TW. The shoulder region 10S includes the inner shoulder end 11Sin forming an innermost end in the tire width direction TW. In the shoulder region 10S, an outermost end in the tire width direction TW is the ground contacting end 11E.

The out-of-shoulder region 10Sout is provided on the outer side of the shoulder region 10S in the tire width direction TW. Specifically, the out-of-shoulder region 10Sout has a range from the ground contacting end 11E to 0.05W outward of the ground contacting end 11E in the tire width direction TW.

### (Tread profile)

A tread profile according to the first embodiment is described below. The tread profile means a contour (i.e. surface shape) of the tread portion 10 in the cross-section taken along the tire width direction TW and the tire radial direction TR. However, it should be noted that the tread profile means an outline of the tread portion 10 assuming the tread portion 10 has no grooves.

In the first embodiment, the profile of the center region 10C defined by M radii of curvature CR(n) (n = 1 to M) in order of proximity to the tire equator line CL. Fig. 1 shows CR(1) and CR(2) as an example of the radii of curvature CR(n). M is an integer and it is sufficient if M satisfy the condition M ≥ 1. The greater the value of n, a portion defined by CR(n) is located further outward in the tire width direction TW.

The profile of the shoulder region 10S is defined by N radii of curvature SR(n) (n = 1 to N) in order from inner side in the tire width direction TW. Fig. 1 shows SR(1), SR(2), and SR(3) as an example of the radii of curvature SR(n). N is an integer and it is sufficient if N satisfy the condition N ≥ 3. The greater the value of n, a portion defined by SR(n) is located further outward in the tire width direction TW.

The profile of the out-of-shoulder region 10Sout is defined by L radii of curvature SR(n) (n = N+1 to N+L). Fig. 1 shows SR(4) and SR(5) as an example of the radii of curvature SR(n) in order from inner side in the tire width direction TW. L is an integer and it is sufficient if L satisfy the condition L ≥ 1. The greater the value of n, a portion defined by SR(n) is located further outward in the tire width direction TW.

In such a case, first, the profile of the shoulder region 10S satisfies the following condition. Specifically, N and the radii of curvature SR(n) satisfy condition (1): N ≥ 3 and SR(n) / SR(n + 1) ≤ 3. In the case illustrated in Fig. 1, for example, the condition of SR(1) / SR(2) ≤ 3 and SR(2) / SR(3) ≤ 3 is satisfied.

Second, the profile of the center region 10C satisfies the following condition. Specifically, SR(1) and CR(M) satisfy condition (2): CR(M) / SR(1) ≥ 5, where SR(1) defines an innermost portion in the tire width direction of the radii of curvature SR(1) to SR(N) and CR(M) defines an outermost portion in the tire width direction of the radii of curvature CR(1) to CR(M). In the case illustrated in Fig. 1, for example, the condition CR(2) / SR(1) ≥ 5 is satisfied.

Third, the profile of the out-of-shoulder region 10Sout preferably satisfies the following condition. Specifically, the radii of curvature SR(n) preferably satisfy condition (3): SR(n) / SR(n+1) ≤ 3. In the case illustrated in Fig. 1, for example, the condition SR(4) / SR(5) ≤ 3 is satisfied.

Note that if the condition (3) is satisfied, SR(N+1) and SR(N) also satisfy the condition SR(N) / SR(N+1) ≤ 3, where SR(N+1) defines an innermost portion in the tire width direction of the radii of curvature SR(N+1) to SR(N+L) and SR(N) defines an outermost portion in the tire width direction of the radii of curvature SR(1) to SR(N). In the case illustrated in Fig. 1, for example, the condition SR(3) / SR(4) ≤ 3 is satisfied.

In the first embodiment, it should be noted that portions adjacent to each other share a tangent at the boundary of the portions adjacent to each other of portions defined by the radii of curvature (SR(n) or CR(n)).

Preferably, SR(n) is in a range of 10 to 500 mm in the first embodiment. Preferably, CR(n) is in a range of 800 to 3000 mm.

### (Advantageous effects)

In the first embodiment, N and the radii of curvature SR(n) satisfy the condition (1) of N ≥ 3 and SR(n) / SR(n + 1) ≤ 3. That is, the surface (i.e. tread profile) of the shoulder region 10S in the tire radial direction TR is gradually varied along the tire width direction TW in the cross-section taken along the tire width direction TW and the tire radial direction TR. This prevents or reduces the deviation of a ground contact pressure between the shoulder region 10S and a road surface even when the shoulder region 10S is deformed during rotation of the tire 100, and wear resistance and uneven wear resistance can be improved.

In the first embodiment, SR(1) and CR(M) satisfy the condition (2) of CR(M) / SR(1) ≥ 5, where SR(1) defines the innermost portion in the tire width direction of the radii of curvature SR(1) to SR(N) and CR(M) defines the outermost portion in the tire width direction of the radii of curvature CR(1) to CR(M). That is, the tread profile of the entire tread portion 10 approaches a rectangular shape, thereby improving wear resistance.

In the first embodiment, the radii of curvature SR(n) also satisfy the condition (3) of SR(n) / SR(n+1) ≤ 3 in the out-of-shoulder region 10Sout. Therefore the deviation of the ground contact pressure between the shoulder region 10S and the road surface is prevented or reduced even when a camber angle is large, and wear resistance and uneven wear resistance can be improved.

### [Evaluation results]

Evaluation results are described below. In particular, uneven wear resistance and wear resistance are evaluated by preparing samples (conventional example, Example 1, and Example 2) having different radii of curvature defining the tread profile. Example 1 is not according to the present invention.

Test conditions are as follows:
- Tire size: 245/45R18
- Load: 45 kN
- Camber angle: -2 degrees

Under such conditions, a tire was mounted on a vehicle, the vehicle was caused to travel, and uneven wear resistance and wear resistance were measured. The uneven wear resistance and the wear resistance are represented by an index based on the amount of wear, and the index means that the greater the value of the index, the better result is obtained.

A ground contact width W, radii of curvature, and switching positions of the radii of curvature of each of the samples are shown in Tables 1 to 4, and the evaluation results are shown in Table 1.

Here, the ground contact width W is a width in the tire width direction of the surface of the tread in contact with a road surface under the condition that the tire is mounted on a normal rim as defined by JATMA, the internal pressure of the tire is a normal internal pressure as defined by JATMA, a load applied to the tire is 80% of the maximum load capacity as defined by JATMA, and a camber angle is 0 degrees. The radii of curvature define a tread profile. Of portions defined by the radii of curvature, portions adjacent to each other share a tangent at the boundary of the portions adjacent to each other. The switching position of a radius of curvature is a position at which the radius of curvature changes. The switching position of the radius of curvature is represented by the proportion (%) of a width from the tire equator line to the switching position to a width from the tire equator line to the ground contacting end. For example, L1 indicates a position at which R1 changes to R2.

**[Table 1]**

| | | Conventional Example | Example 1 | Example 2 |
|---|---|---|---|---|
| Ground Contact Width W (mm) | | 179.5 | 180.0 | 186.3 |
| Shoulder Region | Number of Radii of Curvature | 3 | 18 | 17 |
| | Radii of Curvature (mm) | Table 2 | Table 3 | Table 4 |
| | Satisfy Condition (1) | No | Yes | Yes |
| Center Region | Number of Radii of Curvature | 1 | 1 | 1 |
| | Radii of Curvature (mm) | Table 2 | Table 3 | Table 4 |
| | Satisfy Condition (2) | No | No | Yes |
| Out -of-Shoulder Region | Number of Radii of Curvature | - | - | 2 |
| | Radii of Curvature (mm) | Table 2 | Table 3 | Table 4 |
| | Satisfy Condition (3) | No | No | Yes |
| Evaluation Results | Uneven Wear Resistance | 100 | 130 | 125 |
| | Wear Resistance | 100 | 102 | 125 |

**[Table 2]**

| Conventional Example | | | | |
|---|---|---|---|---|
| | Radius of Curvature [mm] | | Switching Position [%] | |
| Center Region | R1 | 700 | L1 | 51.1 |
| Shoulder Region | R2 | 300 | L2 | 71.5 |
| | R3 | 300 | L3 | 85.6 |
| | R4 | 35 | L4 | 100 |

**[Table 3]**

| Example 1 | | | | |
|---|---|---|---|---|
| | Radius of Curvature [mm] | | Switching Position [%] | |
| Center Region | R1 | 700 | L1 | 51 |
| | R2 | 300 | L2 | 54 |
| | R3 | 284 | L3 | 57 |
| | R4 | 269 | L4 | 59 |
| | R5 | 253 | L5 | 62 |
| | R6 | 238 | L6 | 65 |
| | R7 | 222 | L7 | 67 |
| | R8 | 206 | L8 | 70 |
| | R9 | 191 | L9 | 73 |
| | R10 | 175 | L10 | 76 |
| Shoulder Region | R11 | 160 | L11 | 78 |
| | R12 | 144 | L12 | 81 |
| | R13 | 129 | L13 | 84 |
| | R14 | 113 | L14 | 86 |
| | R15 | 97 | L15 | 89 |
| | R16 | 82 | L16 | 92 |
| | R17 | 66 | L17 | 95 |
| | R18 | 51 | L18 | 97 |
| | R19 | 35 | L19 | 100 |

**[Table 4]**

| Example 2 | | | | |
|---|---|---|---|---|
| | Radius of Curvature [mm] | | Switching Position [%] | |
| Center Region | R1 | 1800 | L1 | 45 |
| | R2 | 300 | L2 | 48 |
| | R3 | 284 | L3 | 52 |
| | R4 | 269 | L4 | 55 |
| | R5 | 253 | L5 | 58 |
| | R6 | 238 | L6 | 62 |
| | R7 | 222 | L7 | 65 |
| | R8 | 206 | L8 | 68 |
| | R9 | 191 | L9 | 72 |
| Shoulder Region | R10 | 175 | L10 | 75 |
| | R11 | 160 | L11 | 78 |
| | R12 | 144 | L12 | 82 |
| | R13 | 129 | L13 | 85 |
| | R14 | 113 | L14 | 88 |
| | R15 | 97 | L15 | 92 |
| | R16 | 82 | L16 | 95 |
| | R17 | 66 | L17 | 98 |
| | R18 | 51 | L18 | 102 |
| Out-of-Shoulder Region | R19 | 35 | L19 | 105 |

As shown in Table 1, good results have been obtained with respect to both uneven wear resistance and wear resistance in Examples 1 and 2 where the condition (1) of N ≥ 3 and SR(n) / SR(n + 1) ≤ 3 is satisfied, as compared with the conventional example. A good result has been obtained with respect to the wear resistance in Example 2 where the condition (2) of CR(M) / SR(1) ≥ 5 is satisfied, as compared Example 1.

It should be further noted that, although not shown in the evaluation results, the wear resistance and the uneven wear resistance in the out-of-shoulder region 10Sout are also improved in Example 2 where the condition (3) of SR(n) / SR(n + 1) ≤ 3 is satisfied even when a camber angle is large, as compared with Example 1.

### [Other embodiments]

While the present invention has been described in accordance with the above embodiment, it should be understood that the discussion and drawings forming a part of this disclosure does not limit the present invention. Various alternative embodiments, examples, and operation techniques will become apparent to those skilled in the art in view of this disclosure.

Although not specifically described in the above embodiment, the number (N) of radii of curvature defining the tread profile in the shoulder region 10S may be determined based on the ratio (SR(N) / SR(1)) of SR(N) defining the outermost portion in the tire width direction to SR(1) defining the innermost portion in the tire width direction of the radii of curvature SR(1) to SR(N). If SR(N) / SR(1) is equal to or greater than 10% and is less than 20%, N preferably satisfies the condition N ≥ 4. If SR(N) / SR(1) is equal to or greater than 20% and is less than 30%, N preferably satisfies the condition N ≥ 5. It should be noted that N satisfies the condition N ≥ 3 even when SR(N) / SR(1) is less than 10%.

### Industrial Applicability

As described above, the present invention provides a tire capable of improving wear resistance and uneven wear resistance and, thus, is particularly useful for a tire including a tread portion having a ground contacting tread surface.

## Claims

1. A tire (100) comprising a tread portion (10) having a ground contacting tread surface that comes into contact with a road surface, wherein
the ground contacting tread surface includes a pair of ground contacting ends (11E, 11E) forming outermost ends in a tire width direction (TW),
the tread portion (10) includes a shoulder region (10S) having a range from one of the pair of ground contacting ends (11E) to 0.20W to 0.30W inward of the one ground contacting end (11E) in the tire width direction (TW) where a distance between the pair of ground contacting ends (11E, 11E) is a ground contact width W,
a tread profile that is a contour of the shoulder region (10S) is defined by N radii of curvature SR(n) (n = 1 to N) in order from inner side in the tire width direction (TW) in a cross-section taken along the tire width direction (TW) and a tire radial direction (TR), and
the above N and the radii of curvature SR(n) satisfy a condition of: N ≥ 3 and SR(n) / SR(n + 1) ≤ 3, wherein
the shoulder region (10S) includes an inner shoulder end (11Sin) forming an innermost end in the tire width direction (TW),
the tread portion (10) includes a center region (10C) having a range from a tire equator line (CL) to the inner shoulder end (11Sin),
a tread profile that is a contour of the center region (10C) is defined by M radii of curvature CR(n) (n = 1 to M) in order of proximity to the tire equator line (CL) in the cross-section taken along the tire width direction (TW) and the tire radial direction (TR), and
SR(1) and CR(M) satisfy a condition CR(M) / SR(1) ≥ 5, where SR(1) defines an innermost portion in the tire width direction (TW) of the radii of curvature SR(1) to SR(N) and CR(M) defines an outermost portion in the tire width direction (TW) of the radii of curvature CR(1) to CR(M),
wherein the surface of the shoulder region (10S) in the tire radial direction (TR) is gradually varied along the tire width direction (TW) in the cross-section taken along the tire width direction (TW) and the tire radial direction (TR).

2. The tire according to claim 1, wherein
the tread portion (10) includes an out-of-shoulder region (10Sout) having a range from one of the pair of ground contacting ends (11E) to 0.05W outward of the one ground contacting end (11E) in the tire width direction (TW),
a tread profile that is a contour of the out-of-shoulder region (10Sout) is defined by L radii of curvature SR(n) (n = N+1 to N+L) in order from inner side in the tire width direction (TW) in the cross-section taken along the tire width direction (TW) and the tire radial direction (TR), and
the radii of curvature SR(n) satisfy a condition SR(n) / SR(n + 1) ≤ 3.

## Patentansprüche

1. Reifen (100), der einen Laufflächenabschnitt (10) umfasst, der eine Bodenberührungsprofiloberfläche hat, die in Berührung mit einer Straßenoberfläche kommt, wobei
die Bodenberührungsprofiloberfläche ein Paar von Bodenberührungsenden (11E, 11E) einschließt, die in einer Reifenbreitenrichtung (TW) äußerste Enden bilden,
der Laufflächenabschnitt (10) einen Schulterbereich (10S) einschließt, der eine Reichweite von einem von dem Paar von Bodenberührungsenden (11E) bis 0,20 W bis 0,30 W von dem einen Bodenberührungsende (11E) in der Reifenbreitenrichtung (TW) nach innen hat, wobei ein Abstand zwischen dem Paar von Bodenberührungsenden (11E, 11E) eine Bodenberührungsbreite W ist,
ein Laufflächenprofil, das ein Umriss des Schulterbereichs (10S) ist, definiert wird durch N Krümmungsradien SR(n) (n = 1 bis N) in der Reihenfolge von einer in der Reifenbreitenrichtung (TW) inneren Seite in einem Querschnitt entlang der Reifenbreitenrichtung (TW) und der Reifenradialrichtung und
das obige N und die Krümmungsradien SR(n) eine Bedingung von N ≥ 3 und SR(n) / SR(n +1) ≤ 3 erfüllen, wobei
der Schulterbereich (10S) ein inneres Schulterende (11Sin) einschließt, das ein in der Reifenbreitenrichtung (TW) innerstes Ende bildet,
der Laufflächenabschnitt (10) einen Mittenbereich (10C) einschließt, der eine Reichweite von einer Reifenäquatorlinie (CL) bis zu dem inneren Schulterende (11Sin) hat,
ein Laufflächenprofil, das ein Umriss des Mittenbereichs (10C) ist, definiert wird durch M Krümmungsradien CR(n) (n = 1 bis M) in der Reihenfolge der Nähe zu der Reifenäquatorlinie (CL) in dem Querschnitt entlang der Reifenbreitenrichtung (TW) und der Reifenradialrichtung (TR), und
SR(1) und CR(M) eine Bedingung CR(M) / SR(1) ≥ 5 erfüllen, wobei SR(1) einen in der Reifenbreitenrichtung (TW) innersten Abschnitt der Krümmungsradien SR(1) bis SR(N) definiert und CR(M) einen in der Reifenbreitenrichtung (TW) äußersten Abschnitt der Krümmungsradien CR(1) bis CR(M) definiert,
wobei die Oberfläche des Schulterabschnitts (10S) in der Reifenbreitenrichtung (TR) allmählich entlang der Reifenbreitenrichtung (TW) in dem Querschnitt entlang der Reifenbreitenrichtung (TW) und der Reifenradialrichtung (TR) variiert wird.

2. Reifen nach Anspruch 1, wobei
der Laufflächenabschnitt (10) einen Bereich außerhalb der Schulter (10Sout) einschließt, der eine Reichweite von einem von dem Paar von Bodenberührungsenden (11E) bis 0,05 W von dem einen Bodenberührungsende (11E) in der Reifenbreitenrichtung (TW) nach außen hat,
ein Laufflächenprofil, das ein Umriss des Bereichs außerhalb der Schulter (10Sout) ist, definiert wird durch L Krümmungsradien SR(n) (n = N + 1 bis N + L) in der Reihenfolge von einer in der Reifenbreitenrichtung (TW) inneren Seite in dem Querschnitt entlang der Reifenbreitenrichtung (TW) und der Reifenradialrichtung (TR), und
die Krümmungsradien SR(n) eine Bedingung SR(n) / SR(n +1) ≤ 3 erfüllen.

## Revendications

1. Bandage pneumatique (100), comprenant une partie de bande de roulement (10) comportant une surface de bande de roulement en contact avec le sol, entrant en contact avec la surface d'une route ; dans lequel :
la surface de bande de roulement de contact au sol inclut une paire d'extrémités de contact au sol (111 E, 11 E) formant les extrémités externes extrêmes dans une direction de la largeur du bandage pneumatique (TW) ;
la partie de bande de roulement (10) inclut une région d'épaulement (10S) s'étendant d'une extrémité de la paire d'extrémités de contact au sol (11E), jusqu'à 0,20W à 0,30W vers l'intérieur de ladite une extrémité de contact au sol (11 E), dans la direction de la largeur du bandage pneumatique (TW), une distance entre la paire d'extrémités de contact au sol (11E, 11E) correspondant à une largeur de contact au sol W;
un profil de la bande de roulement, constituant un contour de la région d'épaulement (10S), est défini par N rayons de courbure SR (n) (n = 1 à N), dans l'ordre, à partir du côté interne, dans la direction de la largeur du bandage pneumatique (TW), dans une section transversale prise le long de la direction de la largeur du bandage pneumatique (TW) et dans une direction radiale du bandage pneumatique (TR) ; et
le nombre N ci-dessus et les rayons de courbure SR(n) satisfont la condition de : N ≥ 3 et SR(n) /SR (n+1) ≤ 3 ; dans lequel :
la région d'épaulement (10S) inclut une extrémité d'épaulement interne (11Sin) formant une extrémité interne extrême dans la direction de la largeur du bandage pneumatique (TW) ;
la partie de bande de roulement (10) inclut une région centrale (10C) s'étendant d'une ligne équatoriale du bandage pneumatique (CL) vers l'extrémité d'épaulement interne (11Sin) ;
un profil de la bande de roulement, constituant un contour de la région centrale (10C), est défini par M rayons de courbure (CR(n) (n = 1 à M), dans l'ordre, de la proximité de la ligne équatoriale du bandage pneumatique (CL), dans la section transversale prise le long de la direction de la largeur du bandage pneumatique (W) et dans la direction radiale du bandage pneumatique (TR) ; et
SR(1) et CR(M) satisfont la condition de : CR(M) / SR (1) ≥ 5, SR(1) définissant une partie interne extrême dans la direction de la largeur du bandage pneumatique (TW) des rayons de courbure SR(1) à SR(N) et CR(M) définissant une partie externe extrême, dans la direction de la largeur du bandage pneumatique (TW), des rayons de courbure CR(1) à CR(M) ;
dans lequel la surface de la région d'épaulement (10S), dans la direction radiale du bandage pneumatique (TR), est progressivement changée le long de la direction de la largeur du bandage pneumatique (TW) dans la section transversale prise le long de la direction de la largeur du bandage pneumatique (TW) et dans la direction radiale du bandage pneumatique (TR).

2. Bandage pneumatique selon la revendication 1, dans lequel :
la partie de bande de roulement (10) inclut une région hors de l'épaulement (10Sout) s'étendant d'une extrémité de la paire d'extrémités de contact au sol (11 E) jusqu'à 0,05 W vers l'extérieur de ladite une extrémité de contact au sol (11 E), dans la direction de la largeur du bandage pneumatique (TW) ;
un profil de la bande de roulement, constituant un contour de la région hors de l'épaulement (10Sout) est défini par L rayons de courbure SR(n) (n = 1 à N + L), dans l'ordre, à partir du côté interne, dans la direction de la largeur du bandage pneumatique (TW), dans la section transversale prise le long de la direction de la largeur du bandage pneumatique (TW) et dans la direction radiale du bandage pneumatique (TR) ; et
les rayons de courbure SR(n) satisfont la condition de : SR(n) / SR (n + 1) ≤ 3.
